# EUROPEAN PATENT APPLICATION

(11) **EP 1 914 989 A1**
(43) Date of publication of application: **23.04.2008**
(21) Application number: 06301059.9
(22) Date of filing: 18.10.2006
(51) Int. Cl.: H04N 7/16

(54) **Personalized video segment in broadcast world**

(71) Applicant: GEMPLUS, 13420 Gémenos (FR)
(72) Inventor: PRADEN, Anne-marie, 13122, VENTABREN (FR)

(57) **Abstract**

The invention relates to a personal mobile TV system (T,CP) characterized in that it stores an end-user profile, and it stores and runs a content personalization program controlling the system into automatic selection of a video segment source (BN2) depending on the said end-user profile.

## Description

The invention relates to the personalization of broadcasted video service based on mobile TV, a recent technology currently in deployment where the end-user could watch TV on his terminal, such as mobile phone.

Operators use dedicated resources such as a TV broadcast server, a mobile telecommunication network, broadcast servers and a remote server storing secrets. In order to be able to bill the service, operators also use personal tokens for authenticating the end-user who uses a mobile TV service.

The personal tokens are typically subscriber identity module cards associated with mobile phones as terminals, for example UICC cards (Universal Integrated Circuit(s) Card). containing a SIM application (Subscriber Identity Module), in particular when the terminal is a mobile phone connected to a GSM/GPRS (Global System for Mobile communications / General Packet Radio Service) network. Such subscriber identity module card can also host - as another example - an USIM (Universal Subscriber Identity Module), a RUIM (Removable User Identity Module) or an ISIM (IP Subscriber Identity Module) or an EAP-SIM (Extensible Authentication Protocol) application when the terminal associated to the token is a 3GPP one of UMTS or even UTRAN type or a third generation one (3GPP2) of CDMA 2000 type. Such personal tokens are typically compliant with international standard ISO7816.

The personal tokens could also be MMC (Multi-Media Card), or SD card (Secure Digital) or USB card (Universal Serial Bus cards).

The personal tokens could also be a USB key, a mass memory card, or any kind of token carrying some necessary credentials for the broadcast service.

One knows among other networks, the DVB (Digital Video Broadcasting), DAB (Digital Audio Broadcasting), DMB (Digital Multimedia broadcasting), ISDB-T (Integrated Services Digital Broadcasting - terrestrial), and MBMS (Mobile Broadcast Multicast Service) network, which have in common the fact that they are used for data broadcasting.

A broadcast channel implemented through such a network contains more or less services according to the bandwidth available for the data transmission.

End-users connected to the network are able to receive the services if such services are available for all, broadcasted in clear or if such end-users have subscribed to such services.

This service is either broadcasted and then available for every end-user either sent on a point-to-point network (3G network for example) on end-user request.

In case the service is broadcasted, it's the same version of program for every end-user. The service could also be partially personalized. As for example, the services may be broadcasted in anyone of several possible languages that the end-user may select in an Electronic Service Guide (ESG) that is proposed to the end-user on his terminal.

In a broadcast system, the video streams are built by the content providers and are synchronized with the audio stream using timestamps. The receiver is then able to re-synchronize audio and video.

A digital TV service is a collection of video programs transmitted in a continuous stream. This service targets all users connected to the network and then can't contain elements for a specific user.

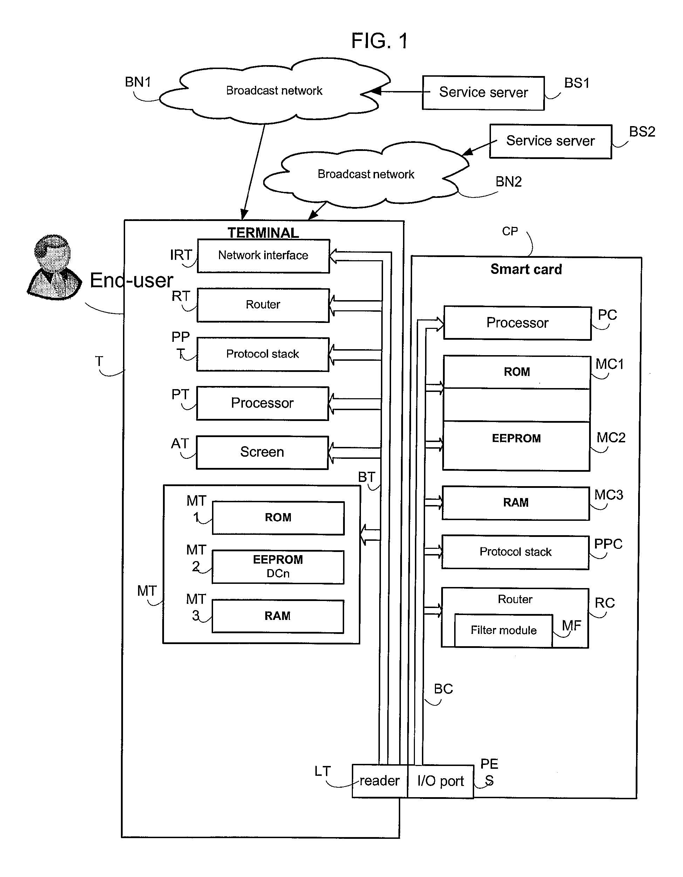

A known way of personalization of the information for the end-user is based on the usage of 'interactive banner', a known way to present additional information to the end-user, as illustrated in figure 1. It's a succession of information offered to the end-user during a program, shown in a dedicated part of the screen. This interactive banner is a way for the provider to complete the program (providing local information such as concert dates and locations), for example in order to allow the end-user to vote for his preferred star during an on-live TV show, or even in order to sell dedicated products.

Depending on the standard used, this interactive banner can be transmitted in several ways:
- Inside an ESG (Electronic Service Guide), via a metadata, in a dedicated part called « related materials ». It can be a link to a web site or an html page.
- In a dedicated document, in a dedicated service, broadcasted separately from the service it's related to.
- In a dedicated document, in a dedicated service, broadcasted with the same condition and same access as the program it's related to.

In those two last cases, an element of the ESG allows the terminal to retrieve the interactive data, knowing their address.

In order to have real interactivity, notification messages can be sent during the program broadcast, so that candidates' names can be changed on line in case of online betting in a reality show as an example.

In the current broadcasting for analog or digital TV, the advertising proposed along with the programs depends on the time of the day. For example during the afternoon of the working days, the advertising targets retired people. During the school holidays, it targets the kids. During the Christmas holidays, most of the advertising is about toys. The operator has knowledge of the audience for the period and sends advertising in accordance to the majority audience.

The advertising proposed during a program may depend on the intended audience for this program: for example the advertising proposed along a football match during the world cup targets men, sportive people (automobile advertising, ..).For the analog TV at home, a program guide is broadcasted on the "teletext" service. For the digital TV at home, the program guide is called EPG "Electronic Program Guide" but is similar to ESG.

Such ESG allows for the end-user the discovery of services available on the network.

The name ESG (Sometimes it is also simply called Service Guide or Service Discovery ) is now used for the digital TV for mobile terminals but is only slightly different from the guide proposed on the Digital TV for home.

The fundamental difference lies on the fact that the ESG is transmitted in IP (Internet Protocol) packets for the new networks for Mobile TV. EPG, which is the transport link for TV at home, is on contrary a service transmitted in MPEG2 transport packets.

ESG is a kind of paper magazine for the TV programs in electronic form that contains information on programs among others as listed below:
- Program name
- Operator identifier who broadcasts the data (Canal+, TPS...)
- Start and end broadcast time
- Parental rating of the program
- Program's synopsis
- Actors
- Critics
- URL links to other information that could be acquired on other channel (a mobile telephony point-to-point channel for example)
- Technical information for the terminal to acquire the giving program (for example retrieve the address in the broadcast network).

This information is transmitted in "metadata" and transmitted in "containers" that are updated when some data are modified.

In the terminal, an engine acquires the data, possibly stores them and transmits them to a graphic engine that will organize the data for display on the end-user request.

In parallel, the terminal knows the beginning and the end time of the program using scheduling data.

Thanks to ESG, the end-user will choose the program he wants to watch or consume.

An ESG bootstrap operation allows the terminal to know which ESGs are available and how to acquire them.

In this ESG bootstrap, the terminal discovers in descriptor (ESGProviderDiscovery Descriptor, for ESG specified for IP datacast over DVB-H for example), the ESG providers that deliver ESGs in a given IP platform. With the Provider Identifier found in this descriptor, the terminal is able to parse another descriptor (ESGAccessDescriptor) to boot the ESG of the specific provider.

This mechanism allows the transmission of several ESG in an IP platform.

Digital TV services convey compressed video and audio streams. We know several video compression systems:
- MPEG1 (standard ISO/IEC 11172-2) with the associated compressed audio system,
- MPEG2 (standard ISO/IEC 13818-2) with the audio system MPEG1, current digital TV standard,
- MPEG4 (standard ISO/IEC14496-2) with the associated audio system based on AAC
- MPEG4-AVC (standard ISO/IEC14496-10) which is an improvement of MPEG4 standard allowing more efficient compression for an equal video quality. This last standard is fashion and more and more used, and deployed in DVB-T (Terrestrial Digital TV) and also in DVB-H (Digital TV on mobile terminals).

The video compression system from Microsoft VC-1 based on Windows Media Video 9 (WMV9) is also an available option for the video broadcasting in DVB-H system.

In broadcast technology, services such as video, interactive banners, are targeting a large population but cannot address a dedicated end-user taking into account his personalized profile. Services are in fact created in a dedicated mobile TV server, as continue data streams, the same for all the end-users. Personalization cannot be made on the server side as it's not compatible with broadcasting technology.

Until now it was not a relevant problem as home TV is usually used by a whole family with different profiles so personalized program were not needed.

Concerning mobile TV, the personalization is a very interesting tool as mobile TV is used on personalized terminals in front of which the end-user is alone. As example, concerning advertising messages between programs or the different part of a program, impact of such message is really more important if advertising is directly addressed to the end-user and concerns his hobbies or preferences.

Another point is the fact that mobile TV programs are generally shorter than those broadcasted on home TV. The mobile TV end-user watches programs when idle, or as an example when waiting for a train or a plane.

Consequently as programs are shorter, advertising sequences are shorter as well so that the probability that advertising is not well adapted to this end-user is even more relevant. Same for interactive banners that cannot propose dedicated products adapted to the end-user interests.

Currently the purpose is to allow an end-user to use such a personalized mobile TV service feeling like it's his program, customized especially for him (as the device he uses is a personal device).

Another purpose of the invention is to provide secure solutions for dedicated personalized mobile oriented applications used by some mobile TV end-users such as on-line betting application (where time and proof of transaction are very important).

Such purposes are achieved by means of the invention as recited in the appended claims.

Other purposes, benefits and aspects of the invention will appear through the following description, which is made in reference to the appended figures, among which:
Figure 1 depicts a terminal set in a network associated with a personal token according to a preferred embodiment of the invention,
Figure 2 is a diagram which represents the interactive banner concept.
Figures 3 and 4 represent two methods implemented by the system described by figure 1, method of personalization of video segment in broadcast world, and more specifically to the personalization of a personalized specific broadcast service based on mobile TV.

A preferred embodiment will now be described in the context of a telecommunication network and in relation to a terminal and a Subscriber Identity Module Card for access to such Mobile TV service via networks, as depicted schematically on figure 1.

Terminal T is made of IRT, a radio telecommunication and a broadcast network interface, a processor PT, a man-machine interface, memories MT. The several elements of the terminal are linked together by a bidirectional bus BT. Memories MT1, MT2 and MT3 include among other ESG application APESG and multimedia application APMM.

Terminal T is also equipped with a central processing unit PT, keyboard or other input device such as microphone, or biometric reader, and display unit AT, and with an IC card reader LT. Such IC card reader LT is linked and/or embedded into the other parts of the terminal T.

Such terminal T is linked to a radio telecommunication network RN connected to a set of other terminals and connected also to a remote server TS. Server TS typically stores dedicated applications and secret information which can be read by remote computers if an authorized end-user makes use of a personal token such as a smart card CP. To that purpose the personal card CP carries some necessary credentials which are challenged by the remote server S during what is called an authentication session.

Terminal T is also linked to a broadcast network BN connected to a set of other terminals and connected also to a remote server BS. Server BS typically stores TV broadcast dedicated applications and secret information which can be sent and used by remote computers if an authorized end-user makes use of a personal card such as card CP. To that purpose the personal card CP carries some necessary mobile TV dedicated credentials which are challenged by the remote server BS during what is called an authentication session when the end-user wants to use the mobile TV services.

In the present embodiment, the smart card CP is a Subscriber Identity Module Card. It may include additional functionalities such as those of a MMC smart card (Multi-Media Card), or SD card (Secure Digital card) or USB card (Universal Serial Bus card) or UICC (Universal Integrated Circuit(s) Card). The smart card CP here has a dedicated application SIM (Subscriber Identity Module) in case the terminal T is a mobile phone linked to a GSM/GPRS (Global System for Mobile communications / General Packet Radio Service) network, or a USIM (Universal Subscriber Identity Module) application, RUIM (Removable User Identity Module) application or ISIM (IP Subscriber Identity Module) application or EAP-SIM (Extensible Authentication Protocol) application, when the terminal T is a mobile phone compliant with Third generation telecommunication standards (3GPP) of UMTS or UTRAN, or of CDMA 2000 type (3GPP2) . The smart card CP includes mainly a processor PC, or several processors, memories blocks MC1 to MC3. The smart card exchanges data with terminal T via I/O port PES and reader LT (using contact or contactless mode).

Memory MC1 includes a ROM or flash memory where operating system is stored. The personalization program dedicated to the invention can be stored into this memory MC1 as well. Memory MC2 is a non volatile memory such as EEPROM or Flash to store keys, identity numbers, and other parameters and credentials related to the end-user such as PIN code and keys for the access to the services. Memory MC3 is a RAM or SRAM memory dedicated to data management. Processor PC, memories MC1, MC2, MC3 and PES port are linked together by the BC bidirectional bus.

This invention is not restricted to a radio phone used as a terminal associated to a personal token such as a smart card. The smart card can be as well a smart card associated to a personal computer linked to a mobile terminal or directly linked to a network, a credit card, an e-purse, a healthcare card, a loyalty card, an e-passport or every additional card linked to a terminal.

For other embodiments, this invention concerns other communicating devices as well such as personal communicating devices (PDA), gaming devices (gaming station) or smart TV set (Portable Multimedia Player).

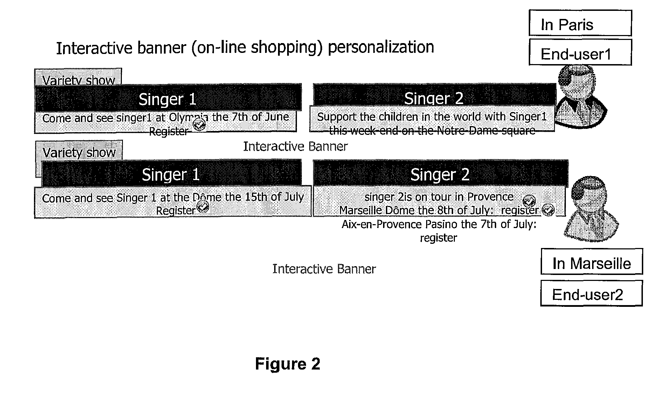

The figure 2 describes the interactive banner. In the upper part of the figure the TV program personalized for an end-user based in Marseille in shown and in the lower part the same TV program with personalization made for another end-user based in Paris. They both can see the same TV show with two singers. But for the first watcher, the banner depicts concerts in the city of the first watcher (Marseille in this case) for singer 1 when singer one is singing and same but for singer 2 when singer 2 is on the screen.

On the TV screen of watcher based in Paris, dates of concerts respectively for singer 1 and then for singer 2 taking place in Paris are display in the lower part of the screen.

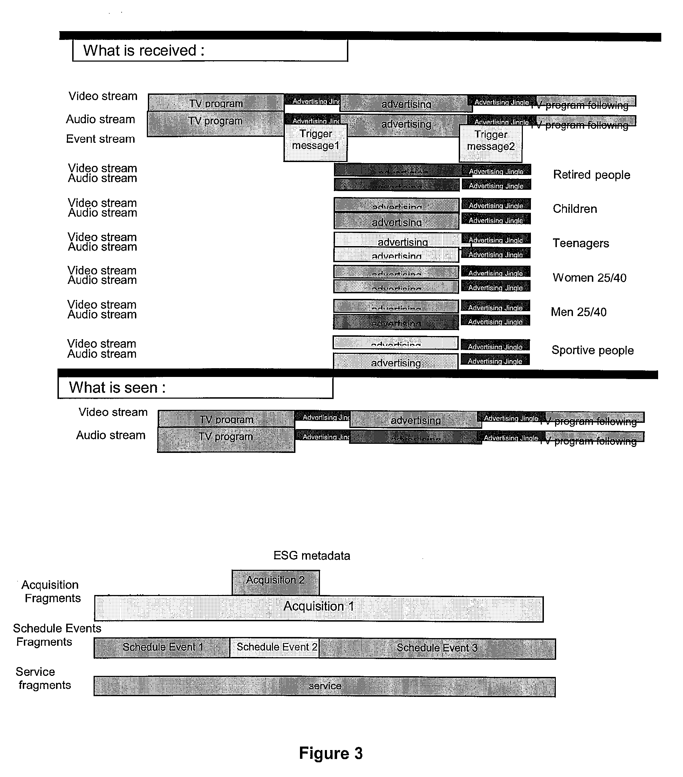

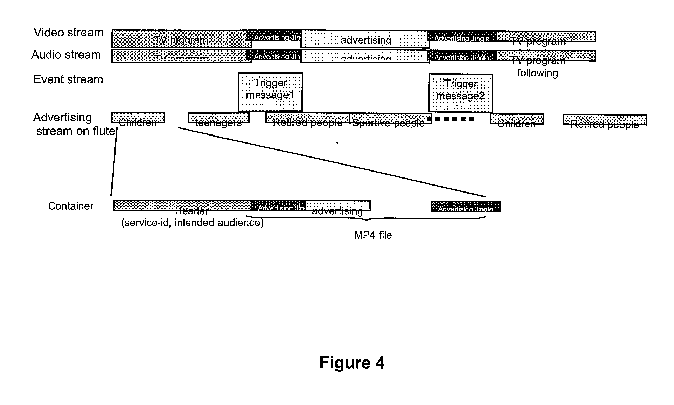

The method used to implement the invention is described in figures 3 and 4 and will be developed below:

In the upper part of the figure 3, a TV service that contains several segments corresponding to different programs is shown. In the present embodiment, at event trigger message 1 reception on the event stream, a zapping is triggered to another content shown to the end-user END-USER when one segment is for example an advertising segment or a program that could be personalized: This advertising segment contains a header which is a header jingle ADVERTISING JINGLE and at the end, a trailer which is a trailer jingle ADVERTISING JINGLE. The advertising content or program content of this specific segment is a generic advertising or default content targeting all users. During the advertising segment, several advertising contents are broadcasted in parallel (advertising 1, advertising 2, advertising 3...), each of these advertising contents targeting a specific population of users (retired people, children, teenagers, women 25/40, men 25/40, sportive people,...) . The ESG metadata shown in the lowest part of figure 3, corresponding to this particular schedule event, event2, describes all the advertising contents, giving the type of content, the intended audience for each, the session description for each telling the terminal where to get the content (IP @ of the video and audio streams). According to the end-user profile UP stored in a personal token, for example in a smart card CP, a Subscriber Identity Module, the mobile phone T automatically zaps to the stream corresponding to the user (Man with age in between 25 and 40 in our example), using the data contained into the acquisition fragment dedicated to men with age in between 25 and 40 in our example. The profile parameters taken into account could effectively be as example the age, the gender and/or the interest of the end-user of the service. In order to solve the additional technical problem of the zapping between the two streams (principal one and personalized advertising one) that could take time, the jingle period is used for the zapping. The jingle video and audio are then used to mask the transition. In one embodiment, depending on the time of zapping, the jingle period could be reduced.

Another aspect of the invention is the synchronisation during the zapping process with the video and audio of the main stream. An event stream broadcasted along with the video and audio of the main stream is used in the terminal to trigger the process of zapping. This event stream contains a collection of event messages that are sent to the personalization program , the application in charge of the process of zapping. Each time the terminal has to zap to other content (for example at the start and the end of the advertising), an event message is sent. These events are just triggers for the personalization program, stored in the terminal or in the personal token; or in another embodiment, they could contain the entire zapping process that will be executed in the terminal. Such executable programs may be executable by the terminal itself, the smart device or both.

Another embodiment is described here after as shown in figure 4: Instead of having several video and audio streams for each end-user profile (which need several IP addresses and could need more bandwidth) this embodiment uses only an advertising stream transmitted, as an example on the flute layer of the IP protocol, as a file. This stream Advertising stream on flute contains some containers, each container containing a MP4 (or 3GPP) file corresponding to the audio and video tracks of advertising content. In this container the intended audience is added in the header for the subsequent filtering with the Subscriber Identity Module and the corresponding service-ID as well. The advertising stream contains all the different advertising contents. This stream is sent to the personal token CP, a Subscriber Identity Module or a Multimedia smart device for the storage of the appropriate advertising content according to the end-user profile, as stored in the subscriber identity module. Another possible embodiment is to filter the appropriate content according to the end-user profile in the terminal so that the terminal sends the appropriate content in the smart-card. The containers are updated on regular bases and this way the personalized advertising content changes in the Subscriber Identity Module in the course of the broadcasting. Using information of the acquisition fragment of the ESG for this service, the terminal zaps at the schedule event event2 (using the process carried in the event stream or triggered by the event carried on the event stream and described in the previous implementation) to the advertising MP4 file stored in the Multimedia smart device. For that process, additional data are needed in the acquisition fragment such as the URL of the MP4 file in the Subscriber Identity Module. This URL has to be defined to be unique for each service. This embodiment uses the same synchronisation process based on the event stream as the previous solution in order to ensure the synchronisation of the zapping process to video and audio. The reading of the MP4 file in the Subscriber Identity Module is embedded in this executable process.

In another variant, similar process may be used for personalizing an interactive banner that is displayed during the broadcasting of a TV service.

In the ESG metadata (related materials for example), different links may be proposed according to parameters (the age, the gender and theme of interest for example). The comparison of the end-user profile parameters to the parameters found in the ESG metadata performed automatically by a dedicated application in the Subscriber Identity Module Card allows to retrieve the content of the interactive banner corresponding to this specific end-user (a man with age in between 25/40 years old in our example).

Therefore an ESG, initially intended for being interactively actuated by an end-user, is used for accessing automatically, without any end-user action, to a specific content. In the case of dynamic interactivity, as it is the case on the figures 3 and 4, notification messages could be used. In this last case the notification message contains several acquisition information of the content to be displayed or several contents to be displayed, attached with parameters. In the example described in the figures 2 and 4, a parameter could be the region for which the content is useful. The notification message is sent to the dedicated application preferably stored into the Subscriber Identity Module. Using the location of the end-user contained in the personal token as requested to the mobile phone the dedicated application selects the content that is useful for this specific end-user.

## Claims

1. A personal mobile TV system (T,CP) **characterized in that** :
• It stores an end-user profile,
• It stores and runs a content personalization program controlling the system into automatic selection of a video segment source (BN2) depending on the said end-user profile.

2. The personal mobile TV system according to claim 1 **characterized in that** it includes a receiving terminal (T) and a personal token (CP) associated to the receiving terminal. (T)

3. The personal mobile TV system according to claim 2 **characterized in that** the end-user profile is stored in the personal token (CP).

4. The personal mobile TV system according to claim 2 or claim 3 **characterized in that** the content personalization program is stored and run in the personal token (CP).

5. The system according to anyone of claims 1 to 4, **characterized in that** the content personalization program controls the TV system into reacting to a dedicated event (Event2) and initiating a display of the video segment (BN2) in such case.

6. A method to provide personal TV on a mobile TV system (T, CP) **characterized in that** it comprises:
• Installation of a content personalization program into the said mobile TV system (T, CP),
• Determination of the profile of an end-user (END-USER) of the system (T, CP) and storage of the said end-user profile into the system,
• Reception of broadcasted content (BN1),
• Automatic selecting of a broadcasted video segment (BN2) depending on the said end-user profile.

7. The method according to claim 6 **characterized in that** the content personalization program controls the TV system into reacting to a dedicated event (Event2) and initiating a display of the broadcasted video segment (BN2) in such case.

8. The method according to anyone of claims 6 or 7 **characterized in that** the mobile TV system includes a personal token and the content personalization program is stored and runs into the personal token (CP).

9. The method to provide personal TV system according to anyone of claims 6, 7 and 8 **characterized in that** the personalization program controls the TV system into reacting to a dedicated event (Event2) and initiating a display of the broadcasted video segment (BN2) on the mobile TV system.

10. The method to provide personal TV system according to anyone of claims 6 to 9, **characterized in that** the automatic selecting step consists in selecting and displaying one of a plurality of simultaneously broadcasted video segment (BN2).

11. The method to provide personal TV according to anyone of claims 6 to 9 **characterized in that** the selecting step is performed prior to the display step, the method further comprising the step which consists in storing the selected broadcasted video segment (NB2)) in the mobile TV system, and later on reading the video segment as previously stored in the mobile TV system.

12. The method to provide personal TV according to anyone of claims 6 to 11, **characterized in that** the TV system displays an original broadcasted video content (NB1) before the selected video segment (NB2) is displayed and the selected video segment is displayed as an added subpart onto the screen area of the original video content.

13. The method to provide personal TV according to anyone of claims 6 to 11, **characterized in that** the TV system displays an original broadcasted video content (NB1) before the selected video segment (NB2) is displayed and the selected video segment is displayed as a substitution of the original video content.

14. The method according to anyone of claims 6 to 13 **characterized in that** data are encrypted on broadcast exchanges.

15. The method according to anyone of claims 6 to 13 **characterized in that** the mobile TV system executes the selecting step without any end-user action.

16. The method according to anyone of claims 6 to 15 **characterized in that** the personalization program is at least partly downloaded into the mobile TV system (T, CP) as the dedicated system.

17. The method according to anyone of claims 6 to 16 **characterized in that** the end-user profile consists in data selected from the group comprising gender, age, geographical location, themes of interests.

18. The method according anyone of claims 6 to 17, **characterized in that** the mobile TV system includes a personal token and the end-user profile is stored in the personal token.
